# EUROPÄISCHE PATENTSCHRIFT

(11) **EP 2 477 765 B1**
(45) Veröffentlichungstag und Bekanntmachung des Hinweises auf die Patenterteilung: **29.08.2018**
(21) Anmeldenummer: 10771319.0
(22) Anmeldetag: 14.09.2010
(51) Int. Cl.: B21D 19/08, B21D 53/88, B21J 5/08, B21K 21/16, B60G 7/00

(54) **VERFAHREN ZUM HERSTELLEN EINES LENKERS FÜR EIN FAHRZEUG**
METHOD FOR MANUFACTURING A CONTROL ARM FOR A VEHICLE
MÉTHODE DE FABRICATION D'UN BRAS OSCILLANT POUR VÉHICULE

(30) Priorität: 14.09.2009 DE 102009041478
(43) Veröffentlichungstag der Anmeldung: 25.07.2012
(73) Patentinhaber: Magna International Inc., Aurora, ON L4G 7K1 (CA)
(72) Erfinder: LINDTNER, Ernst, A-2500 Baden (AT); SCHELLNEGGER, Josef, A-8160 Weiz (AT)
(74) Vertreter: Grünecker Patent- und Rechtsanwälte PartG mbB
(86) Internationale Anmeldenummer: PCT/EP2010/005623
(87) Internationale Veröffentlichungsnummer: WO 2011/029630

(56) Entgegenhaltungen:
- EP-A2- 2 000 335
- DE-B3-102006 028 713
- DE-U1-202009 016 416
- FR-A1- 2 706 096
- JP-A- 58 145 314
- JP-A- H09 327 748
- JP-A- 2003 285 121
- US-A- 5 492 001

## Beschreibung

Die vorliegende Erfindung betrifft ein Verfahren zum Herstellen eines Lenkers für ein Fahrzeug gemäß den Merkmalen des Oberbegriffs des Anspruchs 1. Solch ein Verfahren ist zum Beispiel in der JP-A-409327748 offenbart. Die US 5,492,001 offenbart ein Werkstück mit einem Durchzug und einem abstehenden Grat. Der Grat wird in einer Presse abgeflacht, wobei ein innerhalb des Durchzugs eingeführter Führungszapfen eine Verkleinerung der Innenweite des Durchzugs während dem Pressvorgang verhindert.

Aus der DE 10 2005 006 673 A1 ist ein Bauteil mit einer Basiswandung und einem sich von der Basiswandung erstreckenden Durchzug bekannt. Das Bauteil ist aus Metall ausgebildet und dient als Träger für ein Zahnrad aus Kunststoff, das auf einen äußeren Kragen des Bauteiles aufgeformt wird. Am Außenumfang des Durchzugs oder inneren Kragens wird ein Kugellager fixiert, um das Zahnrad drehbar zu lagern.

Das Bauteil wird hergestellt, indem zunächst aus einer ebenen Platine ein halbkugelförmiger Durchzug durch Tiefziehen ausgebildet wird. In das Zentrum des halbkugelförmigen Durchzugs wird ein Loch gestanzt, das einen Durchmesser hat, welcher kleiner ist als die Hälfte des größten Innendurchmessers des halbkugelförmigen Durchzugs. Anschließend wird der halbkugelförmige Durchzug durch Tiefziehen zu einem kegelförmigen Durchzug umgeformt. Danach wird dieser durch Tiefziehen zu einem zylinderförmigen Durchzug umgeformt. Durch den Zwischenschritt ist die Formänderung des Materials pro Zug geringer als wenn der zylinderförmige Durchzug unmittelbar aus dem halbkugelförmigen Durchzug geformt werden würde. Anschließend wird die Wandstärke des zylinderförmigen Durchzugs vergrößert, indem dessen Höhe verringert wird. Dabei bleibt der Innendurchmesser des Durchzugs konstant.

Eine äußere Einzugskontur, welche eine Seite der Platine mit einer radial äußeren Kontur des Durchzugs verbindet, weist einen relativ großen Radius auf, so dass das Kugellager nicht vollständig auf dem Außenumfang des Durchzugs positioniert werden kann. Deswegen wird der große Radius entfernt und ein Freistich wird ausgebildet. Um das Ausbilden des Freistiches zu erleichtern, wird als Zwischenschritt der große Radius verkleinert.

Nachdem auch der äußere Kragen ausgebildet ist und das Kunststoffzahnrad vorgesehen ist, wird das Kugellager auf die Außenkontur des Durchzugs oder inneren Kragens aufgepresst.

Aus der DE 10 2006 028 713 B3 ist ein Bauteil bekannt, das ein Lenker für ein Fahrzeug ist. Von einer Basiswandung erstrecken sich mehrere Durchzüge in Form von Krägen, die innenseitige Lagertragflächen haben. Es wird ein Verfahren vorgeschlagen, bei welchem das Bauteil aus einem Blechband hergestellt wird und bis zu seiner Fertigstellung mit dem Blechband verbunden bleibt.

Ein weiteres Verfahren zur Herstellung eines Durchzugs ist beispielsweise aus der JP2003285121A bekannt.

Der vorliegenden Erfindung liegt die Aufgabe zugrunde, ein Bauteil mit einer Basiswandung und einem sich von dieser erstreckenden Durchzug so auszubilden, dass der Durchzug ein Element, beispielsweise ein Lager, gut aufnehmen kann, sowie ein Verfahren zur Verfügung zu stellen, mit welchem ein derartiges Bauteil auf möglichst einfache Weise herstellbar ist.

Die Aufgabe wird erfindungsgemäß gelöst mit einem Verfahren mit den Merkmalen des Anspruches 1.

Durch das Verkürzen der Einzugskontur und das damit einhergehende Verschieben der Innenkontur zu der Seite der Basiswandung, wird ein Bauteil erhalten, dessen Durchzug gegenüber einem Durchzug gleicher Länge und unverkürzter Einzugskontur eine längere Innenkontur aufweist, die insbesondere als Lagersitz dienen kann. Mit einem längeren Lagersitz kann ein Lager besser gehalten werden, wobei gleichzeitig die Flächenpressung zwischen Lager und Durchzug verringert werden kann. Wenn es sich bei dem Bauteil beispielsweise um einen Lenker für ein Fahrzeug handelt, kann eine Verlängerung der Lagersitzlänge um wenige Millimeter bereits zu einer deutlichen Verbesserung der Lagercharakteristik, insbesondere des Führungsverhaltens eines Rades führen. Mit dem erfindungsgemäßen Verfahren lässt sich die Einzugskontur unabhängig von der Dicke der Basiswandung einstellen.

Vorzugsweise kann die Einzugskontur in Längsrichtung des Durchzugs gerundet sein und ihr Rundungsradius durch das Stauchen auf einen Wert von etwa 2 mm oder kleiner verringert werden, vorzugsweise auf einen Wert von etwa 1 mm oder kleiner, besonders bevorzugt auf einen Wert von 0,5 mm oder kleiner. Wenn der Rundungsradius zuvor beispielsweise einen Wert von 5 mm hatte, ist eine Verkleinerung auf einen Wert von etwa 2 mm, 1 mm oder sogar 0,5 mm ein deutlicher Zugewinn an Länge der Innenkontur, insbesondere wenn der für den Durchzug zur Verfügung stehende Bauraum klein ist, wie dies bei modernen Fahrzeugen häufig anzutreffen ist. Wenn die Durchzugslänge beispielsweise höchstens 8 mm betragen darf, ist ein Zugewinn der Lagersitzlänge von 3 mm, 4 mm oder sogar 4,5 mm erheblich.

Gleichzeitig mit dem Verkürzen der Einzugskontur wird die Innenweite des Durchzugs verkleinert. Somit finden das Verkürzen der Einzugskontur und das Verändern der Innenweite in einem integrierten Fertigungsschritt statt. Dabei kann Zeit eingespart werden. Ferner können das Verkürzen der Einzugskontur und das Verändern der Innenweite mit weniger Energie ausgeführt werden, insbesondere weil bei einem gleichzeitigen Ausführen dieser Vorgänge der Einfluss der Materialverfestigung geringer ausfallen kann, als wenn die Vorgänge nacheinander ausgeführt werden. Außerdem können sich die beiden Vorgänge bei gleichzeitiger Ausführung gegenseitig begünstigen, was einen Synergieeffekt bedeutet.

Gleichzeitig mit dem Verkürzen der Einzugskontur wird die Wandstärke des Durchzugs vergrößert. Folglich finden das Verkürzen der Einzugskontur und das Vergrößern der Wandstärke in einem integrierten Fertigungsschritt statt. Hierdurch kann Zeit gespart werden. Außerdem können sich das Vergrößern der Wandstärke des Durchzugs und das Verkürzen der Einzugskontur gegenseitig begünstigen, das heißt es gibt einen Synergieeffekt. Zudem können die beiden Vorgänge mit weniger Energie ausgeführt werden, da die Materialverfestigung geringer ausfallen kann, als wenn die Vorgänge nacheinander ausgeführt werden.

Günstigerweise kann gleichzeitig mit dem Verkürzen der Einzugskontur der Durchzug auf seine vorgesehenen Endmaße kalibriert werden. Folglich finden das Verkürzen der Einzugskontur und das Kalibrieren in einem integrierten Fertigungsschritt statt. Hierdurch wird Zeit gespart.

Vorteilhafterweise kann der anfängliche Durchzug durch das Tiefziehen eine etwa zylindrische Form mit flachem Boden erhalten. Auf diese Weise hat der Durchzug einen guten Materialvorrat für nachfolgende Fertigungsschritte und ist, sofern eine zylindrische Endform gewünscht ist, einer solchen zylindrischen Endform schon gut angenähert.

Bevorzugterweise kann der gesamte flache Boden ausgestanzt werden. Hierdurch ist kaum noch Umformarbeit notwendig, wenn der Durchzug hiernach beispielsweise zylindrisch durchgestellt werden soll, um auf Seiten der entstandenen Bodenöffnung eine gerade zylindrische Form zu erhalten.

Besonders vorteilhaft kann als nächster Schritt nach einem Ausstanzen des Bodens der Durchzug zylindrisch durchgestellt werden. Hierdurch erhält er auf Seiten der entstandenen Bodenöffnung eine gerade zylindrische Form.

Besonders günstig kann die Wandstärke des Durchzugs, ausgehend von der Wandstärke des anfänglichen Durchzugs, insgesamt um wenigstens 0,3 mm vergrößert werden, vorzugsweise um wenigstens 0,4 mm, besonders bevorzugt um wenigstens 0,6 mm. Durch das Erhöhen der Wandstärke des Durchzugs wird seine Belastbarkeit erhöht. Vorteilhafterweise kann die Wandstärke des Durchzugs auf einen Wert vergrößert werden, welcher größer ist als die Wandstärke der Basiswandung. Somit kann ein Ausgangsmaterial gewählt werden, das der gewünschten Wandstärke der Basiswandung entspricht, obwohl ein Durchzug mit einer Wandstärke gewünscht ist, welche größer ist als die Wandstärke der Basiswandung.

Besonders günstig kann die Wandstärke des Durchzugs auf einen Wert vergrößert werden, welcher wenigstens 0,2 mm größer ist als die Wandstärke der Basiswandung, vorzugsweise wenigstens 0,3 mm größer, besonders bevorzugt wenigstens 0, 5 mm größer. Wenn die Wandstärke der Basiswandung beispielsweise im Bereich von 2 mm liegt, ist es ein deutlicher Zugewinn, wenn die Wandstärke des Durchzugs um 0,2 mm, 0,3 mm oder sogar 0,5 mm vergrößert wird.

In einer nicht erfindungsgemäßen Ausgestaltung kann vor dem Verkürzen der Einzugskontur die Wandstärke des Durchzugs unter Verkleinerung der Innenweite des Durchzugs vergrößert werden. Somit finden das Verkürzen der Einzugskontur und das Verkleinern des Innendurchmessers in einem integrierten Fertigungsschritt statt. Auf diese Weise kann Zeit gespart werden. Außerdem können sich das Verkürzen der Einzugskontur und das Verkleinern des Innendurchmessers gegenseitig begünstigen, das heißt es gibt einen Synergieeffekt. Ferner kann Energie gespart werden, da die Materialverfestigung bei einem integralen Fertigungsschritt geringer sein kann, als wenn die Verkleinerung des Innendurchmessers und das Verkürzen der Einzugskontur nacheinander ausgeführt werden.

Besonders vorteilhaft kann ein Stahl mit einer Zugfestigkeit von 500 N/mm² oder höher zum Herstellen des Bauteils verwendet werden. Überraschenderweise ist das erfindungsgemäße Verfahren trotz der hohen Zugfestigkeit des Stahlmaterials gut ausführbar.

Da die Einzugskontur durch Stauchen geformt ist, hat das Material, mit welchem die Einzugskontur gebildet wird, eine Gefügestruktur mit guter Festigkeit. Ist das Material ein Metall, ist es darüber hinaus durch den Umformvorgang des Stauchens verfestigt. Es wird außerdem ein Bauteil offenbart, gemäß welchem die Einzugskontur in Längsrichtung des Durchzugs gerundet sein kann und ihr Rundungsradius kann etwa 2 mm oder weniger betragen kann, vorzugsweise etwa 1 mm oder weniger, besonders bevorzugt etwa 0,5 mm oder weniger. Damit entfällt nur ein geringer Anteil der Durchzugslänge auf die Einzugskontur. Darf die Länge des Durchzugs beispielsweise höchstens 8 mm betragen, wie es bei modernen Fahrzeugen mit begrenztem Bauraum vorkommen kann, macht eine Einzugskontur von etwa 2 mm, 1 mm oder 0,5 mm nur einen kleinen Teil der Durchzugslänge aus. Wenn der Durchzug ein Lenkerauge ist, steht somit ein guter Anteil der Länge des Durchzugs für die in diesem Fall als Lagersitz fungierende Innenkontur zur Verfügung. Auf diese Weise wird eine gute Lagercharakteristik erreicht, insbesondere ein gutes Führungsverhalten für ein durch den Lenker geführtes Rad. Vorteilhafterweise kann der Durchzug eine größere Wandstärke haben als die Basiswandung. Somit ist das Bauteil trotz verstärktem Durchzug insgesamt bezüglich seines Gewichts leicht ausgebildet. Weiterhin kann der Durchzug eine Wandstärke haben, die wenigstens 0,2 mm größer ist als die Wandstärke der Basiswandung, vorzugsweise wenigstens 0,3 mm größer, besonders bevorzugt wenigstens 0,5 mm. Hat die Basiswandung beispielsweise eine Wandstärke von 2 mm, bedeutet ein Mehr von 0,2 mm, 0,3 mm oder sogar 0,5 mm an Wandstärke eine deutliche Verstärkung des Durchzugs.

Vorteilhafterweise kann das Bauteil aus einem Stahl mit einer Zugfestigkeit von 500 N/mm² oder höher bestehen. Damit kann das Bauteil mit hoher Festigkeit und trotzdem, bezüglich des Gewichts, leicht ausgebildet werden.

Ausführungsformen der Erfindung sind in der Zeichnung gezeigt und werden nachfolgend beschrieben. Es zeigen:
- Figuren 1 bis 6: eine Veranschaulichung verschiedener Produktionsschritte der Herstellung eines Bauteils, wobei das entstehende Bauteil jeweils in einer Längsschnittansicht gezeigt ist und Figur 6 das fertige Bauteil zeigt,
- Figur 7: ein anderes Bauteil in einer Draufsicht, und
- Figur 8: eine Schnittansicht des in Figur 7 gezeigten Bauteils gemäß einer Linie VIII-VIII.

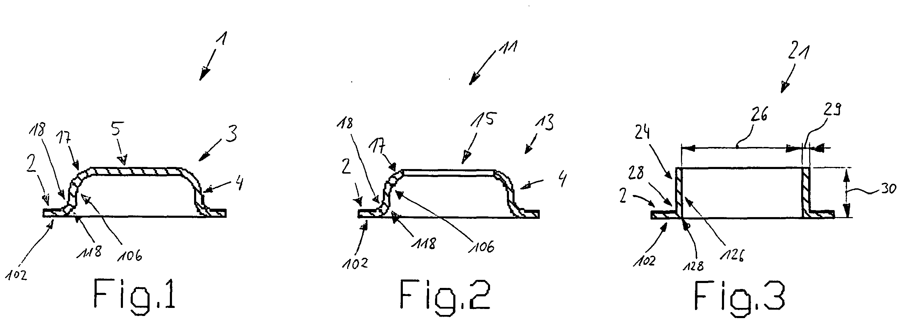

Figuren 1 bis 6 veranschaulichen die Herstellung eines ersten Bauteils. Das Bauteil kann aus einer Platine oder vom Band gefertigt werden. Die Platine oder das Band hat vorzugsweise eine konstante Materialstärke. Es kann aus Metall bestehen, beispielsweise aus Stahl.

Aus der Platine oder dem Band, vorzugsweise mit konstanter Wandstärke, wird ein Topf tiefgezogen, gegebenenfalls in mehreren Zügen. So entsteht ein Bauteil 1, das eine Basiswandung 2 sowie einen anfänglichen Durchzug 3 hat, wie es in Figur 1 gezeigt ist. Dabei ist der anfängliche Durchzug 3 der durch das Tiefziehen entstandene Topf und die Basiswandung 2 wird durch das den anfänglichen Durchzug umgebende Material der Platine oder des Bandes gebildet. Das heißt der anfängliche Durchzug 3 ist durch Tiefziehen eines Bereiches der Basiswandung ausgebildet worden.

Der anfängliche Durchzug 3 hat eine größere Tiefe, das heißt Länge, sowie einen größeren Durchmesser als der angestrebte fertige Durchzug. Hierdurch wird Material für die späteren Umformschritte bevorratet. Außerdem hat der anfängliche Durchzug 3 eine der angestrebten Endform ähnliche Form. In dieser Ausführungsform hat er einen im wesentlichen zylindrischen Mantel 4, da der fertige Durchzug einen zylindrischen Mantel haben soll, das heißt ein zylindrischer Kragen sein soll. Somit ist weniger Umformung notwendig, um den anfänglichen Durchzug 3 in seine fertige Form zu bringen. Außerdem hat der anfängliche Durchzug 3 einen im Wesentlichen ebenen Boden 5. Folglich wird für den Boden 5 nur wenig Material verbraucht und die beim Tiefziehen erfolgende Materialstreckung wird minimiert, zum Beispiel im Vergleich mit einem gerundeten Boden.

Der Mantel 4 des anfänglichen Durchzugs 3 hat einen an den Boden 5 angrenzenden sich radial einwärts erstreckenden Abschnitt 17, welcher in dieser Ausführungsform gerundet ausgebildet ist. Außerdem hat er einen sich radial auswärts erstreckenden Abschnitt 18, welcher an die Basiswandung 2 angrenzt. Der sich radial auswärts erstreckende Abschnitt 18 ist in dieser Ausführungsform ebenfalls gerundet ausgebildet.

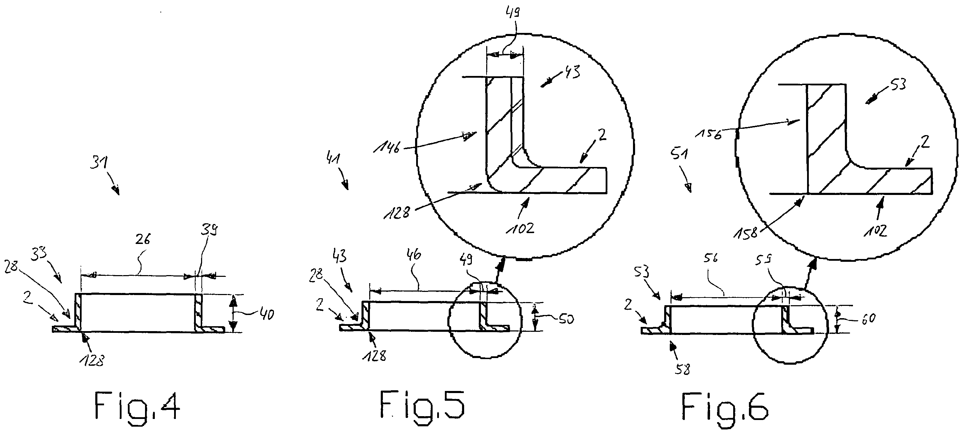

Der anfängliche Durchzug 3 hat eine Einzugskontur 118, welcher eine Seite 102 der Basiswandung 2 mit einer Innenkontur 106 des Mantels 4 verbindet. In der Darstellung von Figur 4 ist die genannte Seite 102 der Basiswandung 2 eine untere Seite. Die anfängliche Einzugskontur 118 kann einen Radius haben, dessen Betrag der Wandstärke der Basiswandung plus 1 mm bis 2 mm entspricht. Die Wandstärke der Basiswandung kann beispielsweise 3 mm betragen.

Der Boden 5 wird entfernt, beispielsweise durch Ausstanzen. Hierdurch entsteht das in Figur 2 gezeigte Bauteil 11 mit einem Durchzug 13, welcher ein Loch 16 hat.

Der sich radial einwärts erstreckende und nunmehr an das Loch 16 angrenzende Abschnitt 17 wird durch Durchstellen, gegebenenfalls in mehreren Schritten, aufgeweitet, das heißt begradigt. Der Radius des sich radial auswärts erstreckenden Abschnittes 18 wird im Wesentlichen durch Umbiegen, zum Beispiel mit Hilfe eines Niederhalters, etwas verringert. Auf diese Weise wird das in Figur 3 gezeigte Bauteil 21 mit einem Durchzug 23 erhalten, welcher einen Mantel 24 hat, der gerade ist, abgesehen von einem sich radial auswärts erstreckenden Abschnitt 28 mit verringertem Radius. Da der Mantel des in Figur 2 gezeigten Bauteiles 11 bereits im Wesentlichen zylindrisch war, war für das Aufweiten des sich radial einwärts erstreckenden Abschnittes 17 nur relativ wenig Umformarbeit erforderlich, so dass es beim zylindrischen Durchstellen nur zu einer geringen Materialstreckung gekommen ist. Folglich hat der Durchzug 23 des in Figur 3 gezeigten Bauteiles 21 noch immer eine über seine Länge im Wesentlichen gleichbleibende Wandstärke. Die Einzugskontur 128 hat nun einen immer noch großen Radius beispielsweise mit einem Betrag, der etwa der Wandstärke der Basiswandung entspricht.

Der in Figur 3 gezeigte Durchzug 23 hat eine Wandstärke 29, eine Höhe oder Länge 30 und seine Innenkontur 126 hat einen Innendurchmesser oder eine Innenweite 29. Durch Zurückdrücken oder Zurückstauchen wird die Höhe oder Länge des Durchzugs verringert und seine Wandstärke vergrößert, wobei seine Innenweite 26 beibehalten wird. Hierdurch wird das in Figur 4 gezeigte Bauteil 31 erhalten, welches einen Durchzug 33 mit vergrößerter Wandstärke 39 und verringerter Höhe oder Länge 40 hat. Vor dem Rückstauchen hatte das Bauteil noch eine Gefügestruktur mit einem für das Tiefziehen typischen Gefügebild, in welchem die Strömung des Materials zu erkennen ist, die beim Ausbilden des anfänglichen Durchzugs 3 durch das Tiefziehen stattgefunden hat. Die Gefügestruktur ist nur durch das Aufweiten des sich radial einwärts erstreckenden Abschnittes 17 in dessen ehemaligem Bereich durch ein Querfließen von Material verändert worden. Durch das Rückstauchen hat sich die Gefügestruktur und somit das Gefügebild verändert. Insbesondere sind die durch das Tiefziehen entstandenen Strömungslinien weiter auseinandergerückt und verlaufen weniger gerade. Das heißt, das durch das Rückstauchen entstandene Gefügebild ist für das Rückstauchen charakteristisch und von dem vorherigen Gefügebild unterscheidbar.

Der Durchzug 33 wird, gegebenenfalls in mehreren Schritten, weiter zurückgedrückt oder zurückgestaucht, wodurch sich seine Höhe oder Länge weiter verringert und seine Wandstärke weiter vergrößert. Gleichzeitig wird sein Innendurchmesser verkleinert. Dadurch entsteht das in Figur 5 gezeigte Bauteil 41 mit einem Durchzug 43, welcher eine weiter vergrößerte Wandstärke 49, eine weiter verringerte Höhe oder Länge 50 und eine verringerte Innenweite 46 hat. Das Gefüge des Durchzugs 43 hat sich durch das weitere Rückstauchen in charakteristischer Weise weiter verändert, was im Gefügebild erkennbar ist.

In einer Vergrößerung von Figur 5 ist veranschaulicht, wie groß der Zugewinn an Wandstärke des Durchzugs bislang ist. Der Betrag des Zugewinns ist mit einer Schraffur mit Doppellinien agedeutet. Die Wandstärke des Durchzugs 43 ist bereits deutlich größer als die Wandstärke der Basiswandung 2. Eine innere Einzugskontur 128, welche eine Seite 102 der Basiswandung 2 mit einer Innenkontur 146 des Durchzugs 43 verbindet, hat während des Stauchens seinen großen Radius beibehalten.

Nun wird der Durchzug weiter zurückgedrückt oder zurückgestaucht, wobei gleichzeitig die Innenweite des Durchzugs verkleinert wird und Durchzug auf seine Endmaße kalibriert wird, insbesondere seine innere Einzugskontur und seine Innenkontur. Dabei wird die Wandstärke des Durchzugs weiter vergrößert und der Radius der Einzugskontur wird minimiert. Er wird auf einen Wert von höchstens 2 mm, bevorzugt höchstens 1 mm und besonders bevorzugt höchstens etwa 0,5 mm minimiert. Auf diese Weise wird das in Figur 6 gezeigte fertige Umformteil 51 erhalten, welches einen Durchzug 53 mit einer Innenkontur 156 mit weiter verringerter Innenweite 56, eine weiter vergrößerter Wandstärke 59, eine weiter verringerte Höhe oder Länge 60 und eine Einzugskontur 158 mit schärferer Krümmung aufweist. Mit dem Verringern des Radius der Einzugskontur 158 ist, bezüglich der Längserstreckung des Durchzugs 53, die axiale Länge der Einzugskontur verkürzt worden und gleichzeitig die Innenkontur 156, insbesondere ihr an die Einzugskontur angrenzender Anfangspunkt, zu der Seite 102 der Basiswandung verschoben worden. Damit hat die Innenkontur durch das Verkürzen der Einzugskontur an Länge dazugewonnen. Das heißt man könnte alternativ sagen, dass die axiale Länge der Einzugskontur verkürzt worden ist und gleichzeitig die Innenkontur 156 zu der Seite 102 der Basiswandung verlängert worden ist.

Wenn der Durchzug 51 beispielsweise als Lagerauge dient und seine Innenkontur 156 als Lagersitz, bedeutet das axiale Verkürzen der Einzugskontur einen merklichen Zugewinn an Lagersitzlänge verglichen mit dem Fall, dass die axiale Länge der Einzugskontur nicht verkürzt worden wäre. Ein Verringern des Radius auf einen Wert, der kleiner ist als die Wandstärke der Basiswandung, z.B. auf 2 mm, 1 mm oder sogar 0,5 mm, bedeutet einen erheblichen Zugewinn an Lagersitzlänge wenn die Höhe oder Länge des fertigen Durchzugs beispielsweise 8 mm beträgt. Mit dieser signifikanten Verkleinerung des Radius bzw. diesem signifikanten Zugewinn an Lagersitzlänge, die/der sich auch prozentual ausdrücken lässt, wird eine deutliche Verbesserung der Lagercharakteristik erreicht, da das Lager über eine größere Länge von dem Durchzug gehalten wird und damit seine Lage weniger verändert, wenn es Kräfte aufnimmt. Gleichzeitig kann die Flächenpressung, mit der das Lagergehalten wird, verringert werden, was die Beanspruchung des Durchzugs verringert.

Die Wandstärke des fertigen Durchzugs 53 kann gegenüber der Wandstärke des anfänglichen Durchzugs 53 beispielsweise um wenigstens 0,3 mm, um wenigstens 0,4 mm, oder sogar um wenigstens 0,6 mm vergrößert worden sein. Die Wandstärke 59 des fertigen Durchzugs 53 kann beispielsweise wenigstens 0,2 mm, wenigstens 0,3 mm oder sogar wenigstens 0,5 mm größer sein als die Wandstärke der Basiswandung 2 oder des Ausgangsmaterials. Die Werte ließen sich auch prozentual ausdrücken. Die Wandstärke der Basiswandung könnte beispielsweise etwa 2 mm, etwa 2,5 mm oder etwa 3 mm betragen.

Zudem lässt sich die Innenkontur des Durchzugs mit dem erfindungsgemäßen Verfahren mit einer hohen Formgenauigkeit ausbilden, insbesondere mit einer hohen Zylindrizität, und mit im Wesentlichen über die Länge konstanter Wandstärke, insbesondere im Längsabschnitt der Innenkontur. Dies führt dazu, dass ein Lager gleichmäßig an der Innenkontur des Durchzugs anliegt, das heißt es gibt einen homogenen Verlauf der Flächenpressung. Dies verbessert die Stabilität, mit welcher das Lager in seiner Position gehalten wird, weiter. Außerdem gibt es nur geringe Schwankungen bei der Auspresskraft des Lagers und eine gute Korrelation zwischen der Kraft zum Einpressen und der Kraft zum Auspressen. Da enge Toleranzen möglich sind, ist der Lagersitz gut reproduzierbar. Es ist bei einem nach dem erfindungsgemäßen Verfahren hergestellten Lenker eine Verbesserung des Fahrverhaltens beispielsweise um etwa 0,5 bis 0,75 Punkte auf einer Bewertungsskala von 1 bis 10 verbesserbar.

Außerdem ist ein Bauteil mit einer solchen verbesserten Lagercharakteristik günstig herstellbar, da keine sogenannten "tailored rolled blanks" als Ausgangsmaterial verwendet werden brauchen, sondern ein Material mit durchgehend gleicher Stärke zum Einsatz kommen kann. Trotzdem wird ein verstärkter Durchzug erhalten, dessen Wandstärke im Wesentlichen unabhängig von der Wandstärke der Basiswandung eingestellt werden kann.

Durch das Verdicken der Wandung des Durchzugs ist dieser in der Lage, auch hohe Kräfte aufzunehmen, ohne einzureißen. Das heißt es ist möglich, beim Herstellen des Bauteils ein Material zu verwenden, dessen Wandstärke für den Durchzug zu dünn wäre. Somit kann das Bauteil insgesamt leicht ausgebildet werden und hat trotzdem einen Durchzug mit ausreichender Wandstärke.

Das erfindungsgemäße Verfahren ist sogar für die Verwendung hochfester Stähle geeignet. Es können hochfeste Stähle eingesetzt werden, die eine Zugfestigkeit von mehr als 400 N/mm² haben oder sogar eine Zugfestigkeit von mehr als 500 N/mm². Beispielsweise können ferritisch-bainitische Stähle eingesetzt werden, wie HDT450F und HDT560F, oder Stähle der Gruppen mit den handelsüblichen Bezeichnungen FB450, FB540, FB560 oder FB590.

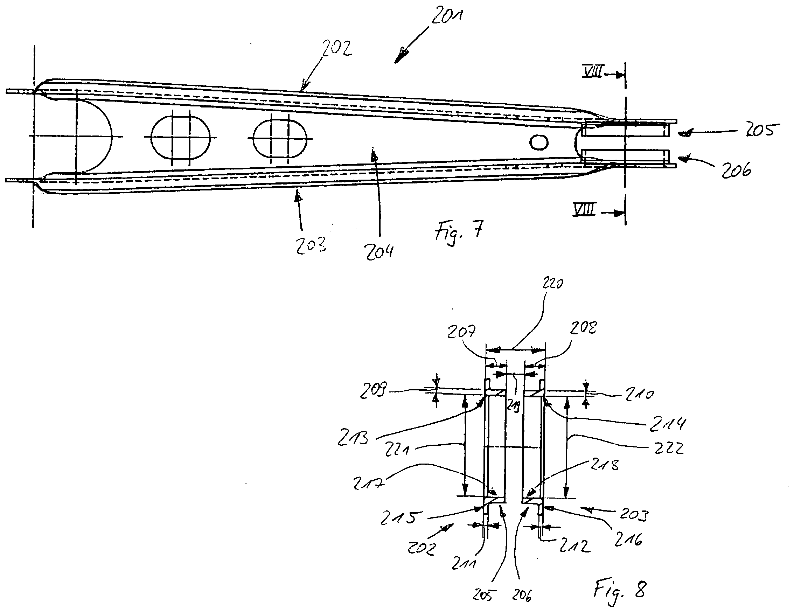

Figur 7 zeigt eine Draufsicht auf ein weiteres Bauteil. Dieses Bauteil ist als Lenker 201 eines Fahrzeuges ausgebildet und wird für die Führung eines Rades eingesetzt. Der Lenker 201 hat eine etwa U-förmige Querschnittsform mit einander gegenüberliegenden Seitenschalen 202, 203, welche durch einen Rücken 204 miteinander verbunden sind.

Der Lenker 201 ist ein einstückiges Umformteil, das mit dem vorangehend beschriebenen erfindungsgemäßen Verfahren hergestellt worden ist, insbesondere sind die Durchzüge, welche seine Lenkeraugen 205, 206 bilden, gemäß diesem Verfahren hergestellt worden. Figur 8 zeigt eine Schnittansicht des Lenkers 201 gemäß einer Linie VIII-VIII in Figur 7, wobei die krageneartigen Lenkeraugen 205, 206 in einer Längsschnittansicht gezeigt sind. Die Lenkeraugen haben eine Höhe oder Länge 207, 208 von beispielsweise 9,5 mm und eine aufgedickte Wandstärke 209, 210 von beispielsweise 2,5 mm. Dagegen haben die Seitenschalen 202, 203, das heißt die Basiswandungen, Wandstärken 211, 212 von beispielsweise 2 mm. Innere Einzugskonturen 213, 214, welche eine jeweilige äußere Fläche 215, 216 der betreffenden Seitenschalen 202, 203 mit einer radial inneren Kontur 217, 218 des betreffenden Lenkerauges 205, 206 verbinden, haben einen Rundungsradius von 0,5 mm. Damit beträgt die Lagersitzlänge in diesem Ausführungsbeispiel 9 mm.

Eine lichte Weite oder ein Abstand 219 zwischen den Lageraugen 205, 206 beträgt beispielsweise 8 mm. Die Außenflächen 215, 216 der Seitenschalen 202, 203 haben auf Höhe der Schnittansicht einen Abstand 220 von beispielsweise 27 mm. Der Abstand 219 zwischen den Lageraugen 205, 206 kann ein notwendiger oder vorgegebener Mindestabstand sein. Der Abstand 220 der Außenflächen 215, 216 der Seitenschalen 202, 203 kann ein konstruktiv vorgegebener Abstand sein oder bauraumbedingt ein Höchstabstand. Die Lenkeraugen 205, 206 sind hohlzylindrisch und haben einen Innendurchmesser 221, 222 von beispielsweise ca. 45 mm.

Das Gefüge des Materialabschnitts, mit welchem jeweils die inneren Einzugskonturen 213, 214 gebildet werden, ist durch Stauchen oder Zurückdrücken geformt. Dementsprechend haben diese Materialabschnitte eine Gefügestruktur, welche ein für das Rückstauchen oder Zurückdrücken charakteristisches Gefügebild hat. Das heißt die Tatsache, dass ein Rückstauchen oder Zurückdrücken erfolgt ist, ist dem Gefügebild zu entnehmen.

## Patentansprüche

1. Verfahren zum Herstellen eines Lenkers (51, 201) für ein Fahrzeug wobei der Lenker (51, 201) eine Basiswandung (2, 202, 203) und einen sich von der Basiswandung erstreckenden und aus der Basiswandung geformten Durchzug (53, 205, 206) in Form eines Lenkerauges aufweist, wobei das Ausbilden des Durchzugs folgende Schritte aufweist:
- Ausbilden eines anfänglichen Durchzugs (3), wobei eine Einzugskontur (118), welche eine Seite (102, 215, 216) der Basiswandung mit einer Innenkontur (106) des Durchzugs (3) verbindet, eine anfängliche Form erhält, und
- Stauchen des Durchzugs,
**dadurch gekennzeichnet,**
**dass** die Einzugskontur in Längsrichtung des Durchzugs durch Stauchen im Vergleich zu der Einzugskontur des anfänglichen Durchzugs (3) verkürzt wird und die Innenkontur zu der Seite (102, 215, 216) der Basiswandung (2, 202, 203) im Vergleich zu der Innenkontur (106) des anfänglichen Durchzugs (3) verschoben wird, wobei gleichzeitig mit dem Verkürzen der Einzugskontur eine Innenweite des Durchzugs im Vergleich zu einer Innenweite des anfänglichen Durchzugs (3) verkleinert wird, wobei gleichzeitig mit dem Verkürzen der Einzugskontur die Wandstärke des Durchzugs vergrößert wird.

2. Verfahren nach Anspruch 1, wobei die Einzugskontur in Längsrichtung des Durchzugs gerundet ist und ihr Rundungsradius durch das Stauchen auf einen Wert von etwa 2 mm oder kleiner verringert wird, vorzugsweise auf einen Wert von etwa 1 mm oder kleiner, besonders bevorzugt auf einem Wert von etwa 0,5 mm oder kleiner.

3. Verfahren nach einem der Ansprüche 1 oder 2, wobei gleichzeitig mit dem Verkürzen der Einzugskontur der Durchzug auf seine vorgesehenen Endmaße kalibriert wird.

4. Verfahren nach einem der Ansprüche 1 bis 3, wobei der anfängliche Durchzug (3) durch das Tiefziehen eine etwa zylindrische Form mit flachem Boden (5) erhält.

5. Verfahren nach Anspruch 4, wobei der gesamte flache Boden (5) ausgestanzt wird.

6. Verfahren nach Anspruch 4 oder 5, wobei als nächster Schritt nach einem Ausstanzen des Bodens (5) der Durchzug zylindrisch durchgestellt wird.

7. Verfahren nach einem der Ansprüche 1 bis 6, wobei die Wandstärke des Durchzugs, ausgehend von der Wandstärke des anfänglichen Durchzugs (3) insgesamt um wenigstens 0,3 mm vergrößert wird, vorzugsweise um wenigstens 0,4 mm, besonders bevorzugt um wenigstens 0,6 mm.

8. Verfahren nach einem der Ansprüche 1 bis 7, wobei die Wandstärke des Durchzugs auf einen Wert vergrößert wird, welcher größer ist als die Wandstärke (211, 212) der Basiswandung (2, 202, 203), und dabei wenigstens 0,2 mm größer ist als die Wandstärke (211, 212) der Basiswandung (2, 202, 203), vorzugsweise wenigstens 0,3 mm größer, besonders bevorzugt wenigstens 0,5 mm größer.

9. Verfahren nach einem der Ansprüche 1 bis 8, wobei ein Stahl mit einer Zugfestigkeit von 500 N/mm² oder höher zum Herstellen des Bauteils (51, 201) verwendet wird.

## Claims

1. A method for manufacturing a control arm (51, 201) for a vehicle, the control arm (51, 201) having a base wall (2, 202, 203) and a passage (53, 205, 206) extending from the base wall and formed from the base wall, in the form of a control arm lug, the forming of the passage comprising the following steps:
- forming an initial passage (3), an initial shape being given to a deep-drawn contour (118), which connects one side (102, 215, 216) of the base wall to an inner contour (106) of the passage (3), and
- upsetting the passage,
**characterized in**
**that** the deep-drawn contour is shortened in the longitudinal direction of the passage by upsetting, as compared to the deep-drawn contour of the initial passage (3), and the inner contour is displaced towards the side (102, 215, 216) of the base wall (2, 202, 203), as compared to the inner contour (106) of the initial passage (3), wherein simultaneously to the shortening of the deep-drawn contour an inner span of the passage is shortened as compared to an inner span of the initial passage (3), wherein simultaneously to the shortening of the deep-drawn contour the wall thickness of the passage is increased.

2. The method according to claim 1, wherein the deep-drawn contour is rounded in the longitudinal direction of the passage and its rounding radius is reduced by said upsetting to a value of about 2 mm or less, preferably to a value of about 1 mm or less, particularly preferably to a value of about 0.5 mm.

3. The method according to one of claims 1 or 2, wherein the passage is calibrated to its intended final dimensions simultaneously to the shortening of the deep-drawn contour.

4. The method according to one of claims 1 to 3, wherein the initial passage (3) obtains an approximately cylindrical shape having a flat bottom by means of deep-drawing.

5. The method according to claim 4, wherein the entire flat bottom (5) is punched out.

6. The method according to claim 4 or 5, wherein the passage is penetrated cylindrically as next step after punching out the bottom (5).

7. The method according to one of claims 1 to 6, wherein, starting from the wall thickness of the initial passage (3), the wall thickness of the passage as a whole is increased by at least 0.3 mm, preferably by at least 0.4 mm, particularly preferably by at least 0.6 mm.

8. The method according to one of claims 1 to 7, wherein the wall thickness of the passage is increased to a value which is greater than the wall thickness (211, 212) of the base wall (2, 202, 203), and here at least 0.2 mm greater than the wall thickness (211, 212) of the base wall (2, 202, 203), preferably at least 0.3 mm greater, particularly preferably at least 0.5 mm greater.

9. The method according to one of claims 1 to 8, wherein a steel having a tensile strength of 500 N/mm² or more is used to manufacture the component (51, 201).

## Revendications

1. Procédé de fabrication d'un bras oscillant (51, 201) pour un véhicule, d'après lequel le bras oscillant (51, 201) présente une paroi de base (2, 202, 203) et un soyage (53, 205, 206) sous la forme d'une oreille de palier d'articulation, s'étendant à partir de la paroi de base et obtenu par formage hors de cette paroi de base, le formage du soyage comprenant les étapes suivantes :
- le formage d'un soyage initial (3), un contour de renfoncement (118), qui relie un côté (102, 215, 216) de la paroi de base avec un contour intérieur (106) du soyage (3), obtenant à cette occasion une forme initiale, et
- le refoulement du soyage,
**caractérisé en ce que** le contour de renfoncement est raccourci, par refoulement dans la direction longitudinale du soyage, par rapport au contour de renfoncement du soyage initial (3), et le contour intérieur est déplacé vers le côté (102, 215, 216) de la paroi de base (2, 202, 203), par rapport au contour intérieur (106) du soyage initial (3), **en ce que** simultanément avec le raccourcissement du contour de renfoncement, une largeur intérieure du soyage est diminuée par rapport à une largeur intérieure du soyage initial (3), et **en ce que** simultanément avec le raccourcissement du contour de renfoncement, l'épaisseur de paroi du soyage est augmentée.

2. Procédé selon la revendication 1, d'après lequel le contour de renfoncement est arrondi dans la direction longitudinale du soyage, et son rayon d'arrondi est réduit par le refoulement, à une valeur d'environ 2 mm ou moins, de préférence à une valeur d'environ 1 mm ou moins, et de manière particulièrement préférée, à une valeur d'environ 0,5 mm ou moins.

3. Procédé selon l'une des revendications 1 ou 2, d'après lequel simultanément avec le raccourcissement du contour de renfoncement, le soyage est calibré à ses dimensions finales prévues.

4. Procédé selon l'une des revendications 1 à 3, d'après lequel le soyage initial (3) obtient, par l'emboutissage, une forme sensiblement cylindrique avec un fond plat (5).

5. Procédé selon la revendication 4, d'après lequel la totalité du fond plat (5) est découpé par matriçage.

6. Procédé selon la revendication 4 ou la revendication 5, d'après lequel l'étape succédant au découpage du fond (5), consiste à rendre cylindrique le passage du soyage.

7. Procédé selon l'une des revendications 1 à 6, d'après lequel l'épaisseur de paroi du soyage est augmentée globalement, à partir de l'épaisseur de paroi du soyage initial (3), d'au moins 0,3 mm, de préférence d'au moins 0,4 mm, et de manière particulièrement préférée d'au moins 0,6 mm.

8. Procédé selon l'une des revendications 1 à 7, d'après lequel l'épaisseur de paroi du soyage est augmentée à une valeur, qui est supérieure à l'épaisseur de paroi (211, 212) de la paroi de base (2, 202, 203), et est à cette occasion plus grande, d'au moins 0,2 mm, que l'épaisseur de paroi (211, 212) de la paroi de base (2, 202, 203), de préférence plus grande d'au moins 0,3 mm, et de manière particulièrement préférée, plus grande d'au moins 0,5 mm.

9. Procédé selon l'une des revendications 1 à 8, d'après lequel on utilise un acier avec une résistance à la traction de 500 N/mm² ou davantage, pour la fabrication de la pièce (51, 201).
